# EUROPEAN PATENT APPLICATION

(11) **EP 2 755 062 A1**
(43) Date of publication of application: **16.07.2014**
(21) Application number: 13305017.9
(22) Date of filing: 10.01.2013
(51) Int. Cl.: G01V 3/24, E21B 47/00

(54) **Asic concept for a downhole tool**

(71) Applicant: Services Pétroliers Schlumberger, 75007 Paris (FR); SCHLUMBERGER TECHNOLOGY B.V., 2514 JG The Hague (NL); Schlumberger Holdings Limited, Tortola 1110 (VG); PRAD Research and Development Limited, Road Town, Tortola 1110 (VG)
(72) Inventor: Vessereau, Patrick, 92142 Clamart Cedex (FR)
(74) Representative: Rzaniak, Martin

(57) **Abstract**

Systems and methods are provided for implementing application-specific integrated circuits (ASICs) in a high-frequency downhole imager. The downhole imager may measure properties of a formation, and one or more ASICs may perform one or more combinations of functions, including acquiring a signal corresponding to the measured properties, processing the signal, and transmitting the signal to other portions of a downhole system or out of the downhole system. The one or more ASICs may function independently for various functions, and more than one ASIC may be implemented for a function.

## Description

### BACKGROUND

This disclosure relates to using ASIC concept to design high performance processor in highly integrated electronic devices in high temperature, high pressure, or high shock environments.

This section is intended to introduce the reader to various aspects of art that may be related to various aspects of the present techniques, which are described and/or claimed below. This discussion is believed to be helpful in providing the reader with background information to facilitate a better understanding of the various aspects of the present disclosure. Accordingly, it should be understood that these statements are to be read in this light, and not as admissions.

Many downhole tools have been developed to determine properties of geological formations surrounding wells. One such downhole tool is referred to as a resistivity tool. Resistivity tools may inject a current into the surrounding geological formation using an injection electrode. The current may return to the tool from the geological formation via a return electrode. In general, the injection electrode may represent a current-measuring electrode through which this current may be measured. By measuring the current, resistivity tools may determine the impedance, or resistivity, of the surrounding formation. Since different types of geological formations may have different resistivities (impedances), determining the resistivity of the surrounding formation may provide an indication of the properties of the geological formation surrounding the well.

For example, resistivity measurements may be used to obtain an image of the geological formation in the well. However, downhole formations may have relatively low resistivity which may be difficult to measure and may result in low resolution images. Sensitivity to formation resistivity may be increased by operating downhole resistivity tools at relatively high operating frequencies (e.g., above about 100 kHz) to detect formation resistivity.

### BRIEF DESCRIPTION OF THE DRAWINGS

FIG. 1 is a schematic diagram of a downhole system in accordance with an embodiment;

FIG. 2 is a schematic diagram of an application-specific integrated circuit ("ASIC") implemented in a downhole system, in accordance with an embodiment; and

FIG. 3 is a schematic diagram of an example of a function integrated in an ASIC implemented in a downhole system, in accordance with an embodiment.

### DETAILED DESCRIPTION

One or more specific embodiments of the present disclosure will be described below. These described embodiments are examples of the presently disclosed techniques. Additionally, in an effort to provide a concise description of these embodiments, certain features of an actual implementation may not be described in the specification. It should be appreciated that in the development of any such actual implementation, as in any engineering or design project, numerous implementation-specific decisions may be made to achieve the developers' specific goals, such as compliance with system-related and business-related constraints, which may vary from one implementation to another. Moreover, it may be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features.

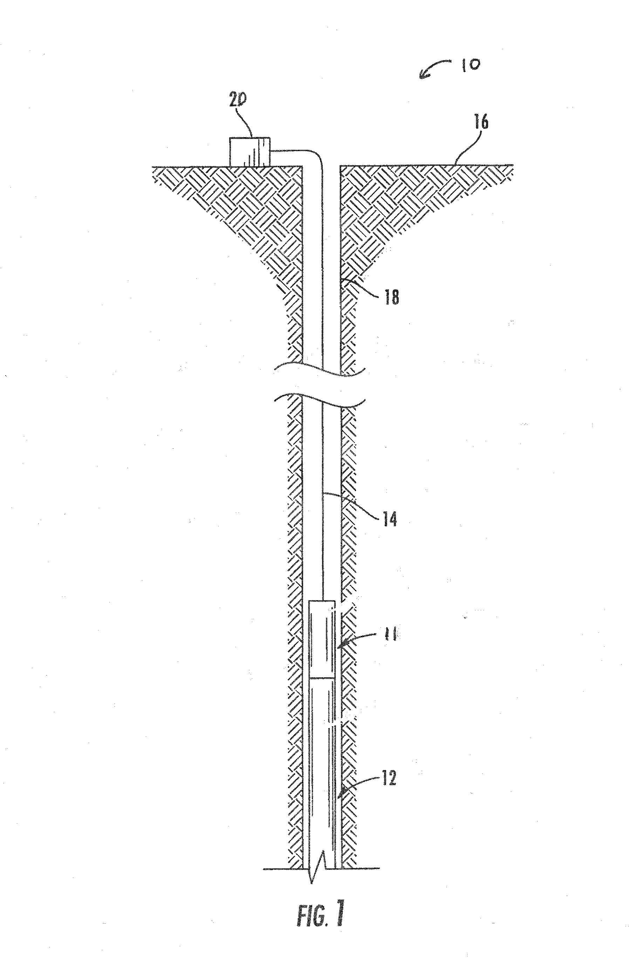

FIG. 1 shows a downhole system 10 cable head 11 connected at its lower end to a logging tool 12. An upper end of the cable head 11 is secured to a cable 14 in this embodiment. The cable 14 may be, for example, a wireline cable extending to the surface 16 of a well or hole 18 and is operable to lower the cable head 11 and one or more logging tools, such as logging tool 12, down to an area where formations and parameters are determined and recorded during logging operations. A vertical well 18 is shown but it should be understood that it can be highly deviated or even horizontal in another example. During a logging operation, data may be transmitted from the logging tool 12 to the cable 14 through the cable head 11. Within the cable 14, the data may be transmitted to a data-transmission and acquisition system 20 at the surface 16.

While a wireline cable is provided as an example of one implementation of the cable 14, the downhole system 10 in the present application may include drilling or logging systems, such as measurement-while-drilling (MWD) systems, logging-while-drilling (LWD) systems, wireline systems, coiled tubing systems, testing systems, completions systems, productions systems, or combinations thereof. Furthermore, the logging tool 12 discussed herein may include any tool suitable for use in the downhole system 10.

In some embodiments, the logging tool 12 may be a downhole imaging tool suitable obtaining an image of formation surrounding the well 18. For example, a downhole imaging tool may be suitable for obtaining resistivity or micro-resistivity measurements. The downhole imaging tool may measure the resistivity of the formation by injecting a current into the surrounding formation using an injection electrode. The current may return to the tool from the geological formation via a return electrode. In general, the injection electrode may represent a current-measuring electrode through which this current may be measured. By measuring the current, the impedance, or resistivity, of the surrounding formation may be determined. The measured resistivity and/or impedance may be used to obtain an image of the formation surrounding the well 18.

To obtain resistivity measurements from different types of formation, a resistivity tool may operate at relatively high frequencies (e.g., above about 100 kHz). Acquiring resistivity data in a high-frequency downhole imaging tool may involve acquiring and processing large amounts of data. Present embodiments relate to systems, methods, processes and assemblies using integrated circuitry in a high-frequency downhole imaging tool. As used herein, integrated circuitry may include an application-specific integrated circuit ("ASIC") or any combination of processors, microprocessors, or memory blocks designed for signal acquisition, data processing, and/or signal output from a downhole system 10. For instance, the integrated circuitry may be suitable for acquiring any local measurements or signal present in the downhole system 10. The integrated circuitry may be configured for data processing such as sensor signal conditioning including various analog functions, various algorithms and mathematical functions, signal compression with various size reduction factors, etc. Furthermore, the integrated circuitry may provide transmission of the digitized signal and/or the processed signal to any other system using various types of transmission channels. The integrated circuitry may provide signal digitization with relatively high resolution.

In some embodiments, the downhole system 10 may include a downhole tool 12 that measures parameters related to the drilling or logging system and/or a rock formation. Moreover, the downhole system 10 may include an ASIC assembly that provides high performance acquisition and processing electronics of the downhole tool 12. The ASIC assembly may be located anywhere in the downhole tool 12.

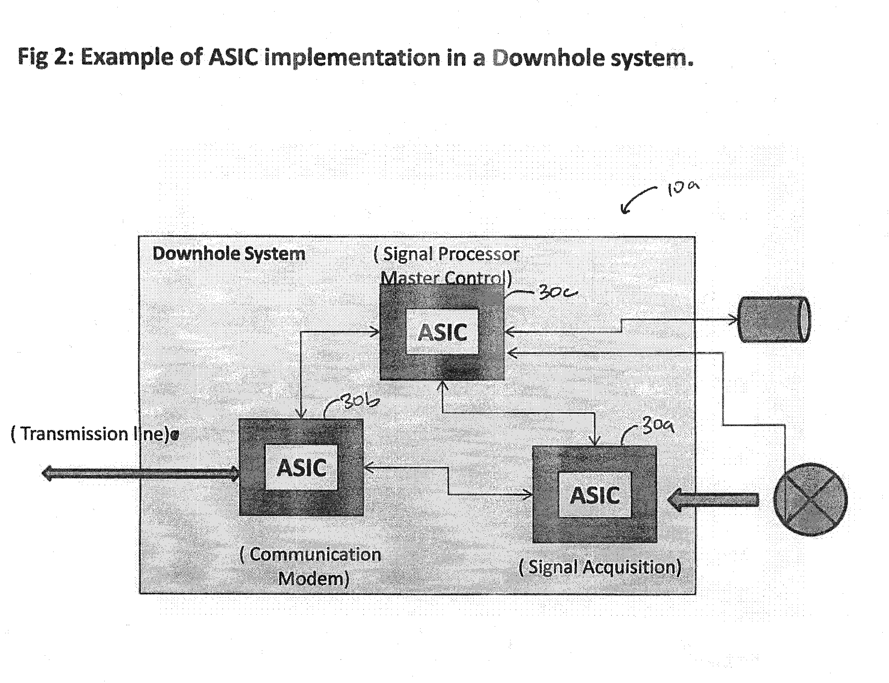

An example of an ASIC assembly implemented in a downhole system 10 is provided in FIG. 2. As depicted in FIG. 2, one or more ASICs 30 may be used for signal processing and/or signal transmission in a downhole system 10a. For example, an ASIC 30a may be suitable for acquiring measurements or data measured by one or more downhole tools 12 in the system 10. An ASIC 30b may receive data acquired by the ASIC 30a and may transmit a signal indicative of the data out of the downhole system 10a. In some embodiments, an ASIC 30c may control the acquisition, processing, and/or transmission of the signals. Data processing may occur at any ASIC 30 or combination of ASICs 30 used in the system 10a.

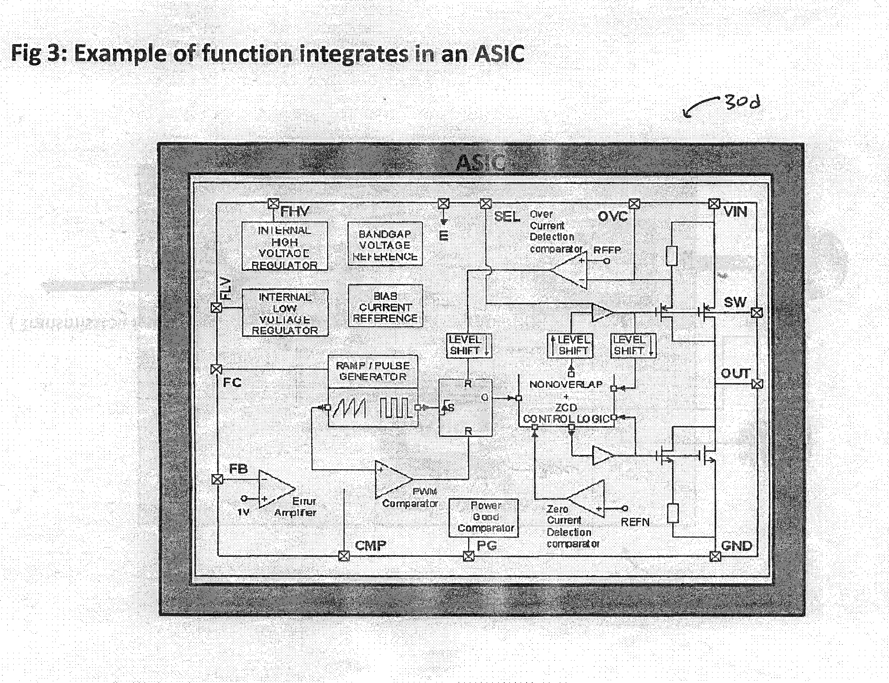

One example of an ASIC in accordance with the present embodiments is provided in the schematic diagram of FIG. 3. The ASIC 30d may include circuitry suitable for acquiring, processing, and/or transmitting a signal in the downhole system 10, including, for example, amplifying, filtering, phase-shifting, processing, transmitting, outputting, etc. In some embodiments, the ASIC 30 is suitable for acquiring, processing, and/or transmitting high frequency data acquired in a high-frequency downhole imaging tool.

Various refinements of the features noted above may exist in relation to various aspects of this disclosure. Further features may also be incorporated in these various aspects as well. These refinements and additional features may exist individually or in any combination. For instance, various features discussed below in relation to one or more of the illustrated embodiments may be incorporated into any of the above-described aspects of this disclosure alone or in any combination. The brief summary presented above is intended to familiarize the reader with certain aspects and contexts of embodiments of this disclosure without limitation to the claimed subject matter.

## Claims

1. A downhole system comprising:
a downhole imaging tool suitable for operating at frequencies above approximately 100 kHz; and
one or more application-specific integrated circuits (ASICs), each configured to perform data acquisition, signal processing, signal transmission, or combinations thereof on measurements obtained by the downhole imaging tool.

2. The downhole system of claim 1, wherein one or more of the one or more ASICs is configured in the downhole imaging tool.

3. The downhole system of claim 1, wherein the one or more ASICs comprises a first ASIC configured to acquire data from the downhole imaging tool.

4. The downhole system of claim 1, wherein the one or more ASICs comprises a second ASIC configured to process data acquired from the downhole imaging tool.

5. The downhole system of claim 1, wherein the one or more ASICs comprises a third ASIC configured to transmit data out of the downhole imaging tool.

6. The downhole system of claim 1, wherein the one or more ASICs comprises a third ASIC configured to transmit data out of the downhole system.

7. A method comprising:
measuring formation properties to determine an impedance or resistivity of a borehole formation using a downhole tool;
acquiring a signal proportional to the impedance or resistivity measurements at a first application-specific integrated computer (ASIC); and
processing the signal at a second ASIC.

8. The method of claim 7, wherein the downhole tool comprises a resistivity tool having an operational frequency of approximately 100 kHz or above.

9. The method of claim 7, wherein the first ASIC and the second ASIC are configured on the downhole tool.

10. The method of claim 7, wherein the first ASIC and the second ASIC are coupled to the downhole tool in a downhole system comprising the downhole tool.

11. The method of claim 7, comprising transmitting the processed signal using a third ASIC.

12. The method of claim 11, wherein the signal is transmitted out of a downhole system.
